# EUROPEAN PATENT SPECIFICATION

(11) **EP 3 898 783 B1**
(45) Date of publication and mention of the grant of the patent: **21.05.2025**
(21) Application number: 19823826.3
(22) Date of filing: 16.12.2019
(51) Int. Cl.: C08G 77/458, C08L 83/10

(54) **PROCESS TO PREPARE AQUEOUS POLYURETHANE DISPERSIONS IN WHICH THE POLYURETHANE INCLUDES POLYSILOXANE AS SIDE CHAIN**
VERFAHREN ZUR HERSTELLUNG VON WÄSSRIGEN POLYURETHANDISPERSIONEN, WOBEI DAS POLYURETHAN POLYSILOXAN ALS SEITENKETTE ENTHÄLT
PROCÉDÉ DE PRÉPARATION DE DISPERSIONS AQUEUSES DE POLYURÉTHANE DANS LESQUELLES LE POLYURÉTHANE COMPREND DU POLYSILOXANE EN TANT QUE CHAÎNE LATÉRALE

(30) Priority: 17.12.2018 NL 2022219
(43) Date of publication of application: 27.10.2021
(73) Proprietor: Stahl International B.V., 5145 PE Waalwijk (NL)
(72) Inventor: DERKSEN, Andries Johannes, 5145 PE Waalwijk (NL)
(74) Representative: V.O.
(86) International application number: PCT/NL2019/050837
(87) International publication number: WO 2020/130808

(56) References cited:
- CN-B- 104 004 159

## Description

This invention relates to a process for the preparation of an aqueous polysiloxane-polyurethane dispersion wherein the polysiloxane is present as a side chain of the polyurethane resin and which are useful as part of the coating of a flexible sheet-like substrate. They improve the anti-soil ability and cleanability of said substrate.

Aqueous dispersions of polyurethanes are well known as basis for the production of coating compositions. They may be used for protective or decorative coating, optionally in combination with additives like colouring agents, pigments, matting agents, and the like. Polyurethanes can possess many desirable properties such as good chemical resistance, water resistance, solvent resistance, toughness, abrasion resistance, durability.

As is well known in the art, aqueous polyurethane dispersions are particularly advantageously prepared by dispersing an isocyanate-terminated polyurethane prepolymer bearing ionic dispersing groups into an aqueous medium and then reacting the prepolymer with an active hydrogen containing chain extender while dispersed in the aqueous medium. See e.g. US 4046729 and US 4066591.

Anti-soiling and cleanability of a coating are desired properties, especially for coatings that come into contact with humans, of which leather and artificial leather, which are flexible sheet-like materials, are a good example such as car seats and other automotive interior parts, such as instrument panels, sun visors and gaiters.

Anti-soiling and cleanability are closely related to anti-graffiti properties. Anti-graffiti properties are often accomplished by incorporating fluorocarbons in the coating because fluorocarbons give hydrophobicizing and oleophobicizing properties. However, such approach is not working well for flexible sheet-like materials, as coatings thereon need to be flexible as well, and the fluorocarbon groups seem to be less active with flexible coatings compared to their activity with hard coatings.

Another approach to achieve anti-soiling and cleanability is to incorporate silicones/siloxanes in a coating. This yields hydrophobicizing properties but no oleophobicizing properties to the coating.

US 9404019 B2 describes the process for coating a sheet-like substrate using aqueous polyurethane dispersions in which polydimethylsiloxane together with long alkyl or alkeyl groups are introduced as side chains of the polyurethane.

CN 103819648 describes the incorporation of linear polydimethylsiloxanediol into a polyurethane, using acetone as solvent, which is later distilled off.

EP 2690117 describes the incorporation of linear polydimethylsiloxanediol into a polyurethane, in which a certain amount of silicon compared to the weight of the polyurethane is incorporated.

US 6579517 B1 describes film-forming polymers based on silicone-modified polyurethanes for use in hair setting compositions, in which linear polysiloxanediamine is used as a chain extender.

US 2005222368 A1 describes the incorporation of linear polydimethylsiloxanediamines, with molecular weights of less than 1500 g/mol, into a polyurethane.

US 20070112129 A1 describes the incorporation of linear polydimethylsiloxanediols into a polyurethane in mini-emulsion.

US 6794445 B2 describes aqueous polyurethane dispersions with the incorporation of linear hydroxyalkyl-functional polydimethylsiloxane into the polyurethane, in which the polyurethane is finally made hydroxyl-functional before dispersing into water.

JP 3047098 B2 describes aqueous polyurethane dispersion with the incorporation of monocarbinol terminated polydimethylsiloxane into the polyurethane.

CN 104 004 159 B discloses a polyurethane resin prepared from a polyol, a chain extender, a diisocyanate and a polydimethylsiloxane having dibasic alcohol groups.

The incorporation of linear polydimethylsiloxanes into a polyurethane gives hydrophobicizing properties to a surface of the dried film of those aqueous polyurethane dispersions. To achieve such properties a certain amount of polydimethylsiloxanes needs to be incorporated. It has been found that the amount of polydimethylsiloxanes that needs to be incorporated to obtain such properties, such as anti-soiling properties or cleanability, can be a lower amount when the polydimethylsiloxane is not a linear polydimethylsiloxane, with hydroxyl or amine group at the termini, but a diol with the polydimethylsiloxane as a side group. These components are also called mono-dicarbinol terminated polydimethylsiloxanes

The present invention provides a process for the preparation of an aqueous polydialkylsiloxane-polyurethane dispersion wherein the polydialkylsiloxane is present as a side chain of the polyurethane resin, comprising the steps of:
i) synthesizing a polyurethane prepolymer from isocyanates, polyols, that include polyols with hydrophilic groups and/or polyols that have an additional functional group that is capable of forming a salt, and a polydialkylsiloxane component A, said component A having 2 or more hydroxyl groups attached to an alkyl group on one end of the linear polydialkylsiloxane chain and an alkyl group on the other end of the linear polydialkylsiloxane chain; and
ii) dispersing the obtained prepolymer into a water phase optionally comprising other additives,
(iii) adding one or more neutralizing agents prior to, simultaneously with or after dispersing the prepolymer in water,
(iv) forming polyurethane by reacting with one or more extension agents simultaneously with or subsequent to the dispersing, after which optionally other additives may be added.

Polyurethane dispersions are generally made by dispersing a polyurethane prepolymer into water. Suitable prepolymers may be made using isocyanate components. These isocyanates are reacted with polyols. Preferred prepolymers may be made with aliphatic di-isocyanates, aromatic di-isocyanates, or a mixture of aromatic and aliphatic di-isocyanates, such as toluene-2,4-diisocyanate, toluene-2,6-diisocyanate and mixtures thereof, diphenylmethane-4,4-diisocyanate, 1,4-phenylenediisocyanate, dicyclohexylmethane-4,4'-diisocyanate, 3-isocyanatomethyl-3,5,5-trimethylcyclo-hexylisocyanate, 1,6-hexyldiisocyanate, 1,5-pentyldiisocyanate, 1,3-bis(isocyanatomethyl)cyclohexane, 2,2,4-trimethyl-1,6-diisocyanatohexane (2,2,4-isomer, 2,4,4-isomer, or mixture thereof), 1,4-cyclohexyldiisocyanate, norbonyldiisocyanate, p-xylylene diisocyanate, 2,4'-diphenylmethane diisocyanate, and/or 1,5-naphthylene diisocyanate. Mixtures of polyisocyanates can be used and also polyisocyanates which have been modified by the introduction of urethane, allophanate, urea, biuret, carbodiimide, uretonimine or isocyanurate residues. Particularly preferred polyisocyanates include aliphatic polyisocyanates such as 3-isocyanatomethyl-3,5,5-trimethylcyclohexylisocyanate, hexamethylene diisocyanate and dicyclohexyl-methane-4,4'-diisocyanate.

Polymeric polyols having molecular weights in the range of 500 to 6000 which may be used in the preparation of the prepolymer particularly include diols and triols and mixtures thereof but higher functionality polyols may be used as well, for example as minor components in admixture with diols. The polyols may be members of any of the chemical classes of polymeric polyols used or proposed to be used in polyurethane formulations. Preferred polyols are selected from the group of polyester polyols, polyesteramide polyols, polyether polyols, polythioether polyols, polycarbonate polyols, polyacetal polyols, polyolefin polyols or mixtures thereof. Preferred polyol molecular weights are from 700 to 4000. Polyols having molecular weights below 500 which may optionally be used in the preparation of the prepolymer particularly include diols and triols and mixtures thereof but higher functionality polyols may be used. Examples of such lower molecular weight polyols include ethylene glycol, diethylene glycol, triethylene glycol, tetraethylene glycol, bis (hydroxyethyl) terephthalate, neopentylglycol, trimethylol propane, cyclohexane dimethanol, furan dimethanol, glycerol and the reaction products, up to molecular weight 499, of such polyols with propylene oxide and/or ethylene oxide.

Polysiloxane components A, with 2 hydroxyl groups attached to an alkyl group on one end of the linear polydialkylsiloxane chain and an alkyl group on the other end of the linear polydialkylsiloxane chain, are short alkyl diols, of between 1 and 10 carbon atoms, with one alkyl, of between 1 and 10 carbon atoms, terminated polydialkylsiloxane side chain, in which there are more than 25, preferably more than 50, and most preferably more than 100 alkylsiloxane repetitive units in the polydialkylsiloxane side chain. These components are also called mono-dicarbinol terminated polydialkylsiloxanes. Preferably the polydialkylsiloxane side chain is a polydimethylsiloxane chain. Examples are MCR-C63 (molecular weight 15000 Dalton), MCR-C62 (molecular weight 5000 Dalton) and MCR-61 (molecular weight 1000 Dalton) from Gelest, X-22-176DX (molecular weight 3000 Dalton), X-22-176F (molecular weight 12500 Dalton) and X-22-176GX-A (molecular weight 14000 Dalton) from Shin-Etsu Chemical Company and Silmer OHT A0 (molecular weight 450 Dalton) from Siltech Corporation. Here, the molecular weight is related to the number of dimethylsiloxane repetitive units in the polydimethylsiloxane side chain, as the weight of the carbinol and alkyl groups is modest compared to the weight of the polydimethylsiloxane, in which the formula weight of the repetitive dimethylsiloxane unit is approximately 90 Dalton.

In the context of the present invention, component A has a molecular weight of above 1000 Dalton, preferably above 3000 Dalton, most preferably 5000 Dalton or more. The molecular weight of mono-dicarbinol terminated polydialkylsiloxanes is generally determined from the measured OH-value (mg KOH/g), which can be used to calculate the functional group equivalent weight (FGEW), according to formula FGEW (g/mol) = 56.0/OH-value. Since for mono-dicarbinol terminated polydialkylsiloxanes there are two hydroxyl groups per molecule, the molecular weight is double of the FGEW.

In the context of the present invention, the amount of component A is generally between 0.1 weight% and 25 weight% compared to total weight of the polyol and isocyanate components in the prepolymer. Preferably the amount of component A is at least 0.1 wt%, more preferably at least 0.3 wt% and most preferably at least 2 wt%, compared to total weight of the polyol and isocyanate components in the prepolymer. Preferably the amount of component A is at most 25 wt%, more preferably at most 20 wt%, most preferably at most 15 wt% or even 12 wt% compared to total weight of the polyol and isocyanate components in the prepolymer.

In the context of the present invention, the component A is reacted simultaneously with all the other reactive components in the prepolymer or is reacted first with (part of) the isocyanate component, prior to the reaction with other isocyanate-reactive components. Hence random or block copolymers can be prepared. Preparation of random block copolymers is more convenient although block copolymer preparation allows to control more easily complete reaction of component A with isocyanate.

Dispersibility of the polyurethanes in water is generally achieved by incorporating hydrophilic groups into the prepolymer. For this reason other polyols are generally present during the prepolymer formation namely polyols with hydrophilic groups and/or polyols that have an additional functional group that is capable of forming a salt such as a polyethoxy diol, a poly(ethoxy/propoxy) diol, a diol containing a pendant ethoxy or (ethoxy/propoxy) chain, a diol containing a carboxylic acid, a diol containing a sulfonic group, a diol containing a phosphate group, a polyethoxy mono-ol, a poly(ethoxy/propoxy) mono-ol, a mono-ol containing a pendant ethoxy or (ethoxy/propoxy) chain, a mono-ol containing a carboxylic acid or a sulphonic acid or salt, or mixtures thereof. A diol containing a carboxylic acid include carboxyl group containing diols and triols, for example dihydroxy alkanoic acids of the formula: R-C-(CH₂-OH)₂-COOH wherein R is hydrogen or alkyl. Examples of such carboxyl containing diols are 2,2-dimethylolpropionic acid and 2,2-dimethylolbutanoic acid. Other useful acid group containing compounds include amino carboxylic acids, for example lysine, cysteine and 3,5-diaminobenzoic acid and sulfonic acids, for example 4,6-diaminobenzene-1,3-disulphonic acid.

The carboxylic acid functions are generally neutralized with a volatile tertiary amine neutralizing agent before or during dispersion of the polyurethane prepolymer into water; yet other known neutralizing agents can be used as well, such as alkaline metal hydroxides. Both the polyurethane and the tertiary amine functional urethane polymer or oligomer or dispersion thereof may contain additional functional groups with the objective to improve the waterdispersibility, to improve adhesion to substrates during application, for performance reasons, or as potential sites for crosslinking. Suitable functions are polyalkoxy functions with a large concentration of ethoxy functions, tertiary amine or quaternary amine functions, perfluoro functions, incorporated silicon functions, hydrazide functions or hydrazone functions, ketone, acetoacetate, or aldehyde functions, or mixtures thereof.

The conversion of any acid groups present in the prepolymer to anionic groups may be effected by neutralising the said acidic groups before, after or simultaneously with formation of the aqueous dispersion. Suitable neutralising agents include tertiary amines such as tripropylamine, dimethyl butyl amine, dimethyl ethanol amine, diethyl ethanol amine, triethylamine, 2-amino-2-methyl-1-propanol and N-ethylmorpholine and include alkaline metal hydroxides such as sodium hydroxide, potassium hydroxide, lithium hydroxide or non-volatile tertiary amines such as N-butyldiethanolamine or N,N-bis[3-(dimethylamino)propyl]-N',N'-dimethylpropane-1,3-diamine or mixtures thereof.

The prepolymer may contain between 0% and 35 weight% co-solvents to achieve a low(er) viscosity, but preferably the prepolymer contains less than 20 weight% co-solvent. If used, suitable co-solvents are N-ethyl pyrrolidine, acetone, 2-butanone, 2,2'-ethylenedioxydiethyl bis(2-ethylhexanoate and dipropylene glycol dimethyl ether. Not only are these co-solvents used to reduce the viscosity of the prepolymer, but also do these allow for a more convenient handling during the dispersion step.

Polyurethane prepolymers useful in the practice of the present invention may be prepared in conventional manner by reacting a stoichiometric excess of the organic polyisocyanate with the polymeric polyol having a molecular weight in the range 500 to 6000 and the other required isocyanate-reactive compounds under substantially anhydrous conditions at a temperature between about 30°C and about 130°C until reaction between the isocyanate groups and the hydroxyl groups is substantially complete. The polyisocyanate and the active hydrogen containing components are suitably reacted in such proportions that the ratio of number of isocyanate groups to the number of hydroxyl groups is in the range from about 1.1:1 to about 6:1, preferably within the range of from 1.5:1 to 3:1. If desired, catalysts, such as bismuth carboxylate, zinc carboxylate, dibutyltin dilaurate, aluminium chelate, zirconium chelate, stannous octoate or triethylenediamine, may be used to assist prepolymer formation.

Prepolymers useful in the practice of the present invention should be substantially liquid under the conditions of the dispersing step, which means that these prepolymers should have a viscosity below 100,000 mPa.s at a temperature of 90°C, measured using a Brookfield LVF Viscometer.

The present invention includes generally the use of an extension agent, which is used to build the molecular weight of the polyurethane prepolymer by reacting the extension agent with the isocyanates functionality of the polyurethane prepolymer. The active hydrogen containing extension agent which is reacted with the prepolymer is suitably a polyol, an amino alcohol, ammonia, a primary or secondary aliphatic, alicyclic, aromatic, araliphatic or heterocyclic amine especially a diamine, hydrazine or a substituted hydrazine. Water-soluble extension agents are preferred, and water itself may be effective. Examples of suitable extension agents useful herein include ethylene diamine, diethylene triamine, triethylene tetramine, propylene diamine, butylene diamine, hexamethylene diamine, cyclohexylene diamine, piperazine, 2-methyl piperazine, phenylene diamine, bis(3-aminopropylamine), sodium 2-[(2-aminoethyl)amino]ethanesulfonate, tolylene diamine, xylylene diamine, tris (2-aminoethyl) amine, 3,3'-dinitrobenzidine, 4,4'methylenebis (2-chloraniline), 3,3'-dichloro-4,4'biphenyl diamine, 2,6-diaminopyridine, 4,4'-diaminodiphenylmethane, menthane diamine, m-xylene diamine, 5-amino-1,3,3-trimethyl-cyclohexanemethyl-amine, sodium 2-[(2-aminoethyl)amino]ethanesulfonate (e.g. Vestamin A95 from Evonik), lysine, 3-(2-aminoethylamino)propane-1-sulfonic acid, polymer of 3-(2-aminoethylamino)propane-1-sulfonic acid (Poly-EPS from Raschig), sodium N-(2-aminoethyl)-B-alaninate (PUD Salt from BASF), amine terminated polyethers such as, for example, Jeffamine D-230 from Huntsman Chemical Company, and adducts of diethylene triamine with acrylate or its hydrolyzed products. Also suitable are materials such as hydrazine, azines such as acetone azine, substituted hydrazines such as, for example, dimethyl hydrazine, 1,6-hexamethylene-bis-hydrazine, carbodihydrazine, hydrazides of dicarboxylic acids and sulfonic acids, adipic acid mono- or dihydrazide, oxalic acid dihydrazide, isophthalic acid dihydrazide, tartaric acid dihydrazide, 1,3-phenylene disulfonic acid dihydrazide omega-amino-caproic acid dihydrazide, hydrazides made by reacting lactones with hydrazine such as gamma-hydroxylbutyric hydrazide, bis-semi-carbazide, bis-hydrazide carbonic esters of glycols such as any of the glycols mentioned above. The amount of extension agent employed should be approximately equivalent to the free-NCO groups in the prepolymer, the ratio of active hydrogens in the chain extender to NCO groups in the prepolymer preferably being in the range from 0.7:1 to 2.0:1. Of course when water is employed as the extension agent, these ratios will not be applicable since the water, functioning both as extension agent and dispersing medium, will be present in a gross excess relative to the free-NCO groups.

While polyurethane prepolymers may retain some isocyanate reactivity for some period of time after dispersion, for purposes of the present invention, a polyurethane prepolymer dispersion is considered to be a fully reacted polyurethane polymer dispersion. Also, for purposes of the present invention, a polyurethane prepolymer or polyurethane polymer can include other types of structures such as, for example, urea groups.

The aqueous polyurethane dispersion comprises at least 25 wt%, preferably at least 30 wt% of polyurethane polymer particles based on total mass of the dispersion. As conventionally done by the skilled person, the weight percentage is calculated beforehand, taking into account which components evaporate and which components do not evaporate. The solids percentage is at a later stage measured to confirm: thereto, a small amount is weighted, then put in an oven at 105°C during one hour and the remaining amount is measured. In this control step, a higher or longer temperature/time regime can be chosen as well, if there are slowly evaporating components present.

If desired, amounts of emulsifiers, defoamers, flame retardants, thickeners, stabilizers, wetting agents, biocides, anti-oxidants and/or anti-settling agents may be included in the prepolymer or the water phase, or may be added to the aqueous polyurethane dispersion.

The prepolymer thus prepared and a water phase are being mixed to obtain a polyurethane dispersion, wherein the extension agent, if the extension agent is different from water, can be added to the water phase prior to the dispersing step, or can be added during the dispersing step, or can be added to the dispersion after the dispersing step. Optionally, neutralization agents, undiluted or with water diluted additives, like emulsifiers, defoamers, flame retardants, thickeners, stabilizers, anti-oxidants and/or anti-settling agents can be added to the water phase or to the dispersion.

The viscosity of the aqueous polyurethane dispersion of the invention is generally lower than 1000 mPa.s, preferably lower than 750, more preferably lower than 500, and most preferably lower than 250 mPa.s, as measured at 25°C using a Brookfield LVF Viscometer.

The invention also relates to the use of the aqueous polyurethane dispersion for the coating of a very wide range of substrates, preferably wood, paper, textile, plastic and metal, in particular of flexible sheet-like substrates such as leather. The present invention also relates to the substrates coated with the aqueous polyurethane dispersion according to the invention. In general said coating or film has a thickness of between 1 micrometer and 1 millimeter, and more preferably between 2 micrometer and 500 micrometer and most preferably between 5 micrometer and 250 micrometer. The invention furthermore relates to a process for the coating of substrates, in particular of leather, which is characterized in that the aqueous polyurethane dispersion according to the invention is applied to substrates. Suitable application techniques are known methods, such as application with a doctor blade, spraying, casting or coating by means of a reverse roll coater.

The above described specific embodiments are all embodiments in accordance with the present invention. The various embodiments may be mutually combined. A feature described for one particular embodiment maybe taken up, incorporated in or otherwise combined with other particular embodiments unless the laws of physics would forbid such combinations.

The present invention will be further elaborated by the following non-limiting working examples. Parts and percentages of components referred to in these working examples are drawn to the weight of the total composition wherein these components are present, like in the other parts of the description and claims, unless otherwise indicated.

### ExAMPLES

### Example 1: preparation of polyurethane dispersion

Under a nitrogen atmosphere a mixture of 15 g of 3-isocyanatomethyl-3,5,5-trimethylcyclohexylisocyanate and 150 g of X-22-176F (a mono-dicarbinol terminated polydimethylsiloxane from Shin-Etsu Chemical Company; molecular weight 12500 Dalton) together with 0.05 g of K-Kat 348 (from King Industries) as catalyst were reacted with each other for one hour at 70°C. The reaction was cooled down and the amount of remaining NCO was measured.

Under a nitrogen atmosphere a mixture 220 g of a polycarbonate diol, derived from hexanediol, with a molecular weight of 2000, 120 g of dipropylene glycol dimethyl ether and 15 g of dimethylolpropanoic acid were heated to 50°C while stirring. 75 g of 3-isocyanatomethyl-3,5,5-trimethylcyclohexylisocyanate and 15 g of the reaction product of the afore-mentioned 3-isocyanatomethyl-3,5,5-trimethylcyclohexylisocyanate and X-22-176F, together with 0.05 g of K-Kat 348 (from King Industries) as catalyst, were added and the mixture was heated to 85°C and stirred for 2 hours to form a polyurethane prepolymer. The reaction was cooled down and the amount of remaining NCO was measured. A mixture was made of 195 g of the prepolymer and 5 g of triethylamine, and this mixture was dispersed into a water phase consisting of 225 g of water, 5 g of Provichem 2588P (a 50% solution of sodium dioctyl sulfosuccinate in dipropylene glycol dimethyl ether, from Proviron Functional Chemicals NV) and 2 g of hydrazine hydrate. The dispersion was stirred for an additional 15 minutes. The solids content of the dispersion was 30%. The viscosity of the dispersion was 70 mPa.s, as measured at 25°C using a Brookfield LVF Viscometer. Of the total solids content of the dispersion, 4 weight% comes from the mono-dicarbinol terminated polydimethylsiloxane.

### Example 2: preparation of polyurethane dispersion

Under a nitrogen atmosphere a mixture 240 g of a polycarbonate diol, derived from hexanediol, with a molecular weight of 2000, 140 g of dipropylene glycol dimethyl ether, 7 g of X-22-176F (a mono-dicarbinol terminated polydimethylsiloxane from Shin-Etsu Chemical Company; molecular weight 12500 Dalton) and 15 g of dimethylolpropanoic acid were heated to 50°C while stirring. 100 g of dicyclohexyl-methane-4,4'-diisocyanate together with 0.05 g of K-Kat 348 (from King Industries) as catalyst were added and the mixture was heated to 100°C and stirred for 2 hours to form a polyurethane prepolymer. The reaction was cooled down and the amount of remaining NCO was measured. A mixture was made of 190 g of the prepolymer and 4 g of triethylamine, and this mixture was dispersed into a water phase consisting of 230 g of water, 4 g of Provichem 2588P (a 50% solution of sodium dioctyl sulfosuccinate in dipropylene glycol dimethyl ether, from Proviron Functional Chemicals NV) and 2 g of hydrazine hydrate. The dispersion was stirred for an additional 15 minutes. The solids content of the dispersion was 30%. The viscosity of the dispersion was 100 mPa.s, as measured at 25°C using a Brookfield LVF Viscometer. Of the total solids content of the dispersion, 2 weight% comes from the mono-dicarbinol terminated polydimethylsiloxane.

### Example 3: preparation of polyurethane dispersion

Under a nitrogen atmosphere a mixture 190 g of a polycarbonate diol, derived from hexanediol, with a molecular weight of 2000, 80 g of dipropylene glycol dimethyl ether, 40 g of X-22-176F (a mono-dicarbinol terminated polydimethylsiloxane from Shin-Etsu Chemical Company; molecular weight 12500 Dalton) and 15 g of dimethylolpropanoic acid were heated to 50°C while stirring. 75 g of 3-isocyanatomethyl-3,5,5-trimethylcyclo-hexylisocyanate together with 0.05 g of K-Kat 348 (from King Industries) as catalyst were added and the mixture was heated to 95°C and stirred for 2 hours to form a polyurethane prepolymer. The reaction was cooled down and the amount of remaining NCO was measured. A mixture was made of 125 g of the prepolymer and 3 g of triethylamine, and this mixture was dispersed into a water phase consisting of 215 g of water, 4 g of Provichem 2588P (a 50% solution of sodium dioctyl sulfosuccinate in dipropylene glycol dimethyl ether, from Proviron Functional Chemicals NV) and 2 g of hydrazine hydrate. The dispersion was stirred for an additional 15 minutes. The solids content of the dispersion was 30%. The dispersion was filtered over 100 µm filter. The viscosity of the dispersion was 60 mPa.s, as measured at 25°C using a Brookfield LVF Viscometer. Of the total solids content of the dispersion, 12 weight% comes from the mono-dicarbinol terminated polydimethylsiloxane.

### Example 4: preparation of polyurethane dispersion

Under a nitrogen atmosphere a mixture of 36 g of 3-isocyanatomethyl-3,5,5-trimethylcyclohexylisocyanate and 64 g of X-22-176DX (a mono-dicarbinol terminated polydimethylsiloxane from Shin-Etsu Chemical Company; molecular weight 3000 Dalton) together with 0.05 g of K-Kat 348 (from King Industries) as catalyst were reacted with each other for one hour at 70°C. The reaction was cooled down and the amount of remaining NCO was measured.

Under a nitrogen atmosphere a mixture 195 g of a polycarbonate diol, derived from hexanediol, with a molecular weight of 2000, 110 g of dipropylene glycol dimethyl ether and 13 g of dimethylolpropanoic acid were heated to 50°C while stirring. 65 g of 3-isocyanatomethyl-3,5,5-trimethylcyclo-hexylisocyanate and 18 g of the reaction product of the afore-mentioned 3-isocyanatomethyl-3,5,5-trimethylcyclo-hexylisocyanate and X-22-176DX, together with 0.05 g of K-Kat 348 (from King Industries) as catalyst, were added and the mixture was heated to 90°C and stirred for 1 hours to form a polyurethane prepolymer. The reaction was cooled down and the amount of remaining NCO was measured. A mixture was made of 170 g of the prepolymer and 4 g of triethylamine, and this mixture was dispersed into a water phase consisting of 200 g of water, 4 g of Provichem 2588P (a 50% solution of sodium dioctyl sulfosuccinate in dipropylene glycol dimethyl ether, from Proviron Functional Chemicals NV) and 2 g of hydrazine hydrate. The dispersion was stirred for an additional 15 minutes. The solids content of the dispersion was 30%. The viscosity of the dispersion was 80 mPa.s, as measured at 25°C using a Brookfield LVF Viscometer. Of the total solids content of the dispersion, 4 weight% comes from the mono-dicarbinol terminated polydimethylsiloxane.

### Example 5: comparative polyurethane dispersion

Under a nitrogen atmosphere 390 g of a polycarbonate diol, derived from hexanediol, with a molecular weight of 2000, 220 g of dipropylene glycol dimethyl ether and 23 g of dimethylolpropanoic acid were heated to 70°C while stirring. 165 g of dicyclohexyl-methane-4,4'-diisocyanate together with 0.05 g of K-Kat 348 (from King Industries) as catalyst was added and the mixture was heated to 95°C and stirred for 2 hours to form a polyurethane prepolymer. The reaction was cooled down and the amount of remaining NCO was measured. A mixture was made of 405 g of the prepolymer and 7 g of triethylamine, and this mixture was dispersed into a water phase consisting of 575 g of water, 4 g of Aerosol OT-75 (from Cytec Industries) and 6 g of hydrazine hydrate. The dispersion was stirred for an additional 15 minutes. The solids content of the dispersion was 30%. The viscosity of the dispersion was 25 mPa.s, as measured at 25°C using a Brookfield LVF Viscometer.

### Example 6: comparative polyurethane dispersion

Under a nitrogen atmosphere a mixture of 22 g of 3-isocyanatomethyl-3,5,5-trimethylcyclohexylisocyanate and 78 g of Fluid OH 40 D (a linear dicarbinol terminated polydimethylsiloxane from Wacker Chemie AG; molecular weight 3000 Dalton) together with 0.05 g of K-Kat 348 (from King Industries) as catalyst were reacted with each other for one hour at 70°C. The reaction was cooled down and the amount of remaining NCO was measured.

Under a nitrogen atmosphere 220 g of a polycarbonate diol, derived from hexanediol, with a molecular weight of 2000, 120 g of dipropylene glycol dimethyl ether and 15 g of dimethylolpropanoic acid were heated to 70°C while stirring. 165 g of dicyclohexyl-methane-4,4'-diisocyanate and 17 g of the reaction product of the afore-mentioned 3-isocyanatomethyl-3,5,5-trimethylcyclo-hexylisocyanate and Fluid OH 40 D,together with 0.05 g of K-Kat 348 (from King Industries) as catalyst was added and the mixture was heated to 90°C and stirred for 2 hours to form a polyurethane prepolymer. The reaction was cooled down and the amount of remaining NCO was measured. A mixture was made of 185 g of the prepolymer and 4 g of triethylamine, and this mixture was dispersed into a water phase consisting of 225 g of water, 5 g of Provichem 2588P (a 50% solution of sodium dioctyl sulfosuccinate in dipropylene glycol dimethyl ether, from Proviron Functional Chemicals NV) and 2 g of hydrazine hydrate. The dispersion was stirred for an additional 15 minutes. The solids content of the dispersion was 30%. The viscosity of the dispersion was 300 mPa.s, as measured at 25°C using a Brookfield LVF Viscometer. Of the total solids content of the dispersion, 4 weight% comes from the linear dicarbinol terminated polydimethylsiloxane.

### Example 7: evaluative tests

Anti-soiling tests were performed on films made on release paper, on a Martin-Dale apparatus following ISO 26082-1:2012 method, with soiling cloth according to ISO 12947-1 size, using Daimler-104 cloth and 200 cycles. The degree of soiling was determined by measuring the coloration by a colour computer. Coloration is expressed in ΔE values, where a higher value indicates more darkening, with a lower value being best, and in Grayscale, where the scale is from 1 to 5, with 5 being best.

Taber Abrasion resistance was tested on films made on vinyl as substrate, following ISO 17076-1:2012 method, using H18 wheel, 500 g load and 200 cycles. The extent of abrasion was measured by weight loss, where a lower weight loss is best.

Water repellence was measured according to AATCC TM 193, which determines resistance to wetting by aqueous liquids. Drops of water-alcohol mixtures of varying surface tensions were placed on the surface of a dried film on release, and the extent of surface wetting was determined visually on a scale from 0 to 8, with 8 indicating the highest water repellence.

| Example | Anti-soiling ΔE | Anti-soiling Grey-scale | Taber abrasion Weight loss (mg) | Water repellence |
|---|---|---|---|---|
| Example 1 | 0.20 | 4.88 | 88 | 4 |
| Example 2 | 0.75 | 4.26 | 80 | 6 |
| Example 3 | 0.62 | 4.64 | 75 | 6 |
| Example 4 | 0.19 | 4.89 | 79 | 6 |
| Comparative Example 5 | 7.86 | 1.79 | 69 | 6 |
| Comparative Example 6 | 0.88 | 4.49 | 69 | 6 |

The comparative example 5 gave a strong coloration after the soiling test, as is demonstrated by the large ΔE value and low value in the grey-scale. The inventive examples 1 to 4 gave a much lower ΔE value and much higher value in the grey-scale. This demonstrates that the anti-soiling is much improved by the incorporation of mono-dicarbinol terminated polydimethylsiloxane into the polyurethane of the aqueous polyurethane dispersion.

The Taber abrasion of the inventive examples 1 to 4 was only little higher than of the comparative example 5, demonstrating that the abrasion is almost not altered by the incorporation of mono-dicarbinol terminated polydimethylsiloxane into the polyurethane of the aqueous polyurethane dispersion.

The water repellence test results demonstrate that the water repellence is increased compared to comparative example 5, by the incorporation of mono-dicarbinol terminated polydimethylsiloxane into the polyurethane of the aqueous polyurethane dispersion.

Of the total solids content of the dispersion from Comparative Example 6, 4 weight% comes from the linear dicarbinol terminated polydimethylsiloxane, which has a molecular weight of 3000 Dalton. Of the total solids content of the dispersion from Example 4, 4 weight% comes from the mono-dicarbinol terminated polydimethylsiloxane, which has a molecular weight of 3000 Dalton. The result in the anti-soiling test of Example 4 is better than of Comparative Example 6. Of the total solids content of the dispersion from Example 2, 2 weight% comes from the mono-dicarbinol terminated polydimethylsiloxane, which has a molecular weight of 125000 Dalton. The result in the anti-soiling test of Example 2 is similar as of Comparative Example 6, whereas Example 2 contains half the weight% of polydimethylsiloxane component.

## Claims

1. A process for the preparation of an aqueous polydialkylsiloxane-polyurethane dispersion wherein the polydialkylsiloxane is present as a side chain of the polyurethane resin, comprising the steps of:
i) synthesizing a polyurethane prepolymer from isocyanates, polyols, that include polyols with hydrophilic groups and/or polyols that have an additional functional group that is capable of forming a salt, and a polydialkylsiloxane component A, said component A having 2 hydroxyl groups attached to an alkyl group on one end of the linear polydialkylsiloxane chain and an alkyl group on the other end of the linear polydialkylsiloxane chain; and
ii) dispersing the obtained prepolymer into a water phase optionally comprising other additives,
(iii) adding one or more neutralizing agents prior to, simultaneously with or after dispersing the prepolymer in water,
(iv) forming polyurethane by reacting with one or more extension agents simultaneously with or subsequent to the dispersing, after which optionally other additives may be added.

2. A process according to claim 1, wherein component A has a molecular weight determined in accordance with the method outlined in the description of above 1000 Dalton, preferably 3000 Dalton or more, most preferably 5000 Dalton or more.

3. A process according to claim 1 or 2, wherein component A is mono-dicarbinol terminated polydialkylsiloxane, preferably a mono-dicarbinol terminated polydimethylsiloxane, of which the alkyl diol chain has between 1 and 10 carbon atoms and of which the polydialkylsiloxane chain has more than 25 dialkylsiloxane repetitive units..

4. A process according to claim 1 to 3, wherein between 0.1 weight% and 25 weight%, preferably between 0.3 weight% and 20 weight%, most preferably between 2 weight% and 15 weight% of component A, compared to total weight of the polyol and isocyanate components in the prepolymer, is used.

5. A process according to claim 1 to 4, wherein the component A is reacted simultaneously with all the other reactive components in the prepolymer or is reacted first with (part of) the isocyanate components, prior to the reaction with other isocyanate-reactive components.

6. A process according to any of claims 1 to 5, wherein the isocyanates are aliphatic di-isocyanates, aromatic di-isocyanates, or a mixture of aromatic and aliphatic di-isocyanates, such as toluene-2,4-diisocyanate, toluene-2,6-diisocyanate and mixtures thereof, diphenylmethane-4,4-diisocyanate, 1,4-phenylenediisocyanate, dicyclohexylmethane-4,4'-diisocyanate, 3-isocyanatomethyl-3,5,5-trimethylcyclo-hexylisocyanate, 1,6-hexyldi-isocyanate, 1,5-pentyldiisocyanate, 1,3-bis(isocyanatomethyl)cyclo-hexane, 2,2,4-trimethyl-1,6-diisocyanatohexane (2,2,4-isomer, 2,4,4-isomer, or mixture thereof), 1,4-cyclohexyldiiso-cyanate, norbonyldiisocyanate, p-xylylene diisocyanate, 2,4'-diphenylmethane diisocyanate, and/or 1,5-naphthylene diisocyanate.

7. A process according to any of claims 1 to 6, wherein the polyols are selected from the group consisting of polyester polyols, polyesteramide polyols, polyether polyols, polythioether polyols, polycarbonate polyols, polyacetal polyols, polyolefin polyols or mixtures thereof, and optionally diols or triols with molecular weight below 500.

8. A process according to any of claims 1 to 7, wherein polyols with hydrophilic groups or polyols that have an additional functional group that is capable of forming a salt, are selected from the group consisting of polyethoxy diol, a poly(ethoxy/-propoxy) diol, a diol containing a pendant ethoxy or (ethoxy/propoxy) chain, a diol containing a carboxylic acid, a diol containing a sulfonic group, a diol containing a phosphate group, a polyethoxy mono-ol, a poly(ethoxy/-propoxy) mono-ol, a mono-ol containing a pendant ethoxy or (ethoxy/propoxy) chain, a mono-ol containing a carboxylic acid or a sulfonic acid or salt, or mixtures thereof.

9. A process according to any of claims 1 to 8, wherein the extension agent is a polyol, water, an amino alcohol, ammonia, a primary or secondary aliphatic, alicyclic, aromatic, araliphatic or heterocyclic amine especially a diamine, hydrazine or a substituted hydrazine, or a mixture thereof, water-soluble extension agents being preferred.

10. A process according to any of claims 1 to 9, wherein the neutralising agent is a tertiary amines such as tripropylamine, dimethyl butyl amine, dimethyl ethanol amine, diethyl ethanol amine, triethylamine, 2-amino-2-methyl-1-propanol and N-ethylmorpholine, or an alkaline metal hydroxides such as sodium hydroxide, potassium hydroxide, lithium hydroxide or non-volatile tertiary amines such as N-butyldiethanolamine or N,N-bis[3-(dimethylamino)propyl]-N',N'-dimethylpropane-1,3-diamine or mixtures thereof.

11. A process according to any of claims 1 to 10, wherein the prepolymer may contain between 0% and 35 weight%, preferably less than 20 weight% of co-solvents.

12. A process according to any of claims 1 to 11, wherein the solids content of the aqueous polyurethane dispersion is at least 25 weight%, preferably at least 30 weight%.

13. A dispersion obtainable by the process as defined in any one of the preceding claims.

14. A coating or film obtained, preferably on a flexible sheet-like substrate, from a dispersion as defined in claim 13.

## Patentansprüche

1. Verfahren zur Herstellung einer wässrigen Polydialkylsiloxan-Polyurethan-Dispersion, wobei das Polydialkylsiloxan als eine Seitenkette des Polyurethanharzes vorhanden ist, umfassend die Schritte von:
i) Synthetisieren eines Polyurethan-Prepolymers aus Isocyanaten, Polyolen, was Polyole mit hydrophilen Gruppen und/oder Polyole mit einer zusätzlichen funktionellen Gruppe einschließt, die in der Lage ist, ein Salz zu bilden, und eine Polydialkylsiloxan-Komponente A, wobei die Komponente A 2 Hydroxylgruppen hat, angefügt an eine Alkylgruppe an einem Ende der linearen Polydialkylsiloxan-Kette und eine Alkylgruppe am anderen Ende der linearen Polydialkylsiloxan-Kette; und
ii) Dispergieren des erhaltenen Prepolymers in eine wässrige Phase, optional umfassend weitere Additive,
(iii) Zugeben eines oder mehrerer Neutralisationsmittel vor, gleichzeitig mit oder nach dem Dispergieren des Prepolymers in Wasser,
(iv) Bilden von Polyurethan durch Reagieren mit einem oder mehreren Streckungsmitteln gleichzeitig mit oder nach dem Dispergieren, wonach optional weitere Additive zugegeben werden können.

2. Verfahren nach Anspruch 1, wobei die Komponente A ein gemäß dem in der Beschreibung dargelegten Verfahren bestimmtes Molekulargewicht von über 1000 Dalton, vorzugsweise 3000 Dalton oder mehr, am stärksten bevorzugt 5000 Dalton oder mehr, hat.

3. Verfahren nach Anspruch 1 oder 2, wobei die Komponente A ein mono-dicarbinolterminiertes Polydialkylsiloxan, vorzugsweise ein mono-dicarbinolterminiertes Polydimethylsiloxan, ist, dessen Alkyldiolkette zwischen 1 und 10 Kohlenstoffatome hat und dessen Polydialkylsiloxankette mehr als 25 Dialkylsiloxan-Wiederholungseinheiten hat.

4. Verfahren nach einem der Ansprüche 1 bis 3, wobei zwischen 0,1 Gew.-% und 25 Gew.-%, vorzugsweise zwischen 0,3 Gew.-% und 20 Gew.-%, am stärksten bevorzugt zwischen 2 Gew.-% und 15 Gew.-% der Komponente A, bezogen auf das Gesamtgewicht der Polyol- und Isocyanatkomponenten im Prepolymer, verwendet werden.

5. Verfahren nach einem der Ansprüche 1 bis 4, wobei die Komponente A gleichzeitig mit allen anderen reaktiven Komponenten im Prepolymer umgesetzt wird oder zuerst mit (einem Teil der) Isocyanatkomponenten umgesetzt wird, vor der Reaktion mit anderen isocyanatreaktiven Komponenten.

6. Verfahren nach einem der Ansprüche 1 bis 5, wobei
die Isocyanate aliphatische Diisocyanate, aromatische Diisocyanate oder eine Mischung aus aromatischen und aliphatischen Diisocyanaten sind, wie Toluol-2,4-diisocyanat, Toluol-2,6-diisocyanat und Mischungen davon, Diphenylmethan-4,4-diisocyanat, 1,4-Phenylendiisocyanat, Dicyclohexylmethan-4,4'-diisocyanat, 3-Isocyanatomethyl-3,5,5-trimethylcyclohexylisocyanat, 1,6-Hexyldiisocyanat, 1,5-Pentyldiisocyanat, 1,3-Bis(isocyanatomethyl)cyclohexan, 2,2,4-Trimethyl-1,6-diisocyanatohexan (2,2,4-Isomer, 2,4,4-Isomer oder eine Mischung davon), 1,4-Cyclohexyldiisocyanat, Norbonyldiisocyanat, p-Xylylendiisocyanat, 2,4'-Diphenylmethandiisocyanat und/oder 1,5-Naphthylendiisocyanat.

7. Verfahren nach einem der Ansprüche 1 bis 6, wobei die Polyole ausgewählt sind aus der Gruppe, bestehend aus Polyesterpolyolen, Polyesteramidpolyolen, Polyetherpolyolen, Polythioetherpolyolen, Polycarbonatpolyolen, Polyacetalpolyolen, Polyolefinpolyolen oder Mischungen davon, und optional Diolen oder Triolen mit einem Molekulargewicht unter 500.

8. Verfahren nach einem der Ansprüche 1 bis 7, wobei Polyole mit hydrophilen Gruppen oder Polyole, die eine zusätzliche funktionelle Gruppe haben, die in der Lage ist, ein Salz zu bilden, ausgewählt aus der Gruppe bestehend aus Polyethoxydiol, einem Poly(ethoxy/-propoxy)diol, einem Diol enthaltend eine Ethoxy- oder (Ethoxy/Propoxy)-Seitenkette, einem Diol enthaltend eine Carbonsäure, einem Diol enthaltend eine Sulfongruppe, einem Diol enthaltend eine Phosphatgruppe, einem Polyethoxymonool, einem Poly(ethoxy/-propoxy)monool, einem Monool enthaltend eine Ethoxy- oder (Ethoxy/Propoxy)-Seitenkette, einem Monool enthaltend eine Carbonsäure oder eine Sulfonsäure oder ein Salz, oder Mischungen davon.

9. Verfahren nach einem der Ansprüche 1 bis 8, wobei das Streckungsmittel ein Polyol, Wasser, ein Aminoalkohol, Ammoniak, ein primäres oder sekundäres aliphatisches, alizyklisches, aromatisches, araliphatisches oder heterozyklisches Amin, insbesondere ein Diamin, Hydrazin oder ein substituiertes Hydrazin, oder eine Mischung davon ist, wobei wasserlösliche Streckungsmittel bevorzugt sind.

10. Verfahren nach einem der Ansprüche 1 bis 9, wobei das Neutralisationsmittel ein tertiäres Amin wie Tripropylamin, Dimethylbutylamin, Dimethylethanolamin, Diethylethanolamin, Triethylamin, 2-Amino-2-methyl-1-propanol und N-Ethylmorpholin ist, oder ein Alkalimetallhydroxid wie Natriumhydroxid, Kaliumhydroxid, Lithiumhydroxid oder nichtflüchtige tertiäre Amine wie N-Butyldiethanolamin oder N,N-bis[3-(dimethylamino)propyl]-N',N'-dimethylpropan-1,3-diamin oder Mischungen davon.

11. Verfahren nach einem der Ansprüche 1 bis 10, wobei das Prepolymer zwischen 0 % und 35 Gew.-%, vorzugsweise weniger als 20 Gew.-%, an Hilfslösungsmitteln enthalten kann.

12. Verfahren nach einem der Ansprüche 1 bis 11, wobei der Feststoffgehalt der wässrigen Polyurethan-Dispersion wenigstens 25 Gew.-%, vorzugsweise wenigstens 30 Gew.-%, ist.

13. Dispersion, erhältlich durch das Verfahren, wie in einem der vorhergehenden Ansprüche definiert.

14. Beschichtung oder Film, erhalten, vorzugsweise auf einem flexiblen, folienartigen Substrat, aus einer Dispersion wie in Anspruch 13 definiert.

## Revendications

1. Procédé de préparation d'une dispersion aqueuse à base de polydialkylsiloxane et de polyuréthane dans laquelle le polydialkylsiloxane est présent en tant que chaîne latérale de la résine de polyuréthane, comprenant les étapes suivantes :
i) la synthèse d'un prépolymère de polyuréthane à partir d'isocyanates, de polyols, qui comprennent des polyols comprenant des groupes hydrophiles et/ou des polyols qui possèdent un groupe fonctionnel supplémentaire capable de former un sel, et un composant A de type polydialkylsiloxane, ledit composant A comprenant 2 groupes hydroxyles liés à un groupe alkyle à l'une des extrémités de la chaîne polydialkylsiloxane linéaire et à un groupe alkyle à l'autre extrémité de la chaîne polydialkylsiloxane linéaire ; et
ii) la dispersion du prépolymère obtenu dans une phase aqueuse comprenant éventuellement d'autres additifs,
(iii) l'ajout d'un ou de plusieurs agents de neutralisation avant, simultanément ou après la dispersion du prépolymère dans l'eau,
(iv) la formation de polyuréthane par réaction avec un ou plusieurs agents d'extension simultanément ou après la dispersion, après quoi d'autres additifs peuvent éventuellement être ajoutés.

2. Procédé selon la revendication 1, dans lequel le composant A présente un poids moléculaire, déterminé conformément à la méthode décrite dans la description, supérieur à 1000 Dalton, de préférence de 3000 Dalton ou plus, de préférence de 5000 Dalton ou plus.

3. Procédé selon la revendication 1 ou 2, dans lequel le composant A est un polydialkylsiloxane à terminaison mono-dicarbinol, de préférence un polydiméthylsiloxane à terminaison mono-dicarbinol, dont la chaîne alkylediol présente entre 1 et 10 atomes de carbone et dont la chaîne polydialkylsiloxane présente plus de 25 unités répétitives de type dialkylsiloxane.

4. Procédé selon les revendications 1 à 3, dans lequel on utilise entre 0,1 % en poids et 25 % en poids, de préférence entre 0,3 % en poids et 20 % en poids, de préférence encore entre 2 % en poids et 15 % en poids du composant A, par rapport au poids total des composants polyol et isocyanate dans le prépolymère.

5. Procédé selon les revendications 1 à 4, dans lequel le composant A est mis simultanément en réaction avec tous les autres composants réactifs du prépolymère ou est tout d'abord mis à réagir avec (une partie de) les composants de type isocyanates, avant d'être mis à réagir avec d'autres composants réactifs aux isocyanates.

6. Procédé selon l'une quelconque des revendications 1 à 5, dans lequel les isocyanates représentent des di-isocyanates aliphatiques, des di-isocyanates aromatiques ou un mélange de di-isocyanates aromatiques et aliphatiques, tels que le 2,4-diisocyanate de toluène, le 2,6-diisocyanate de toluène et des mélanges de celui-ci, le 4,4-diisocyanate de diphénylméthane, le diisocyanate de 1,4-phénylène, le 4,4'-diisocyanate de dicyclohexyl-méthane, l'isocyanate de 3-isocyanatométhyl-3,5,5-triméthylcyclohexyle, le diisocyanate de 1,6-hexyle, le diisocyanate de 1,5-pentyle, le 1,3-bis(isocyanatométhyl)cyclo-hexane, le 2,2,4-triméthyl-1,6-diisocyanatohexane (2,2,4-isomère, 2,4,4-isomère ou des mélanges de ceux-ci), le diisocyanate de 1,4-cyclohexyle, le diisocyanate de norbonyle, le diisocyanate de p-xylylène, le diisocyanate de 2,4'-diphénylméthane, et/ou le diisocyanate de 1,5-naphtylène.

7. Procédé selon l'une quelconque des revendications 1 à 6, dans lequel les polyols sont choisis dans le groupe comprenant des polyols de polyester, des polyols de polyesteramide, des polyols de polyéther, des polyols de polythioéther, des polyols de polycarbonate, des polyols de polyacétal, des polyols de polyoléfine ou des mélanges de ceux-ci, et éventuellement des diols ou des triols présentant un poids moléculaire inférieur à 500.

8. Procédé selon l'une quelconque des revendications 1 à 7, dans lequel les polyols comprenant des groupes hydrophiles ou les polyols qui possèdent un groupe fonctionnel supplémentaire capable de former un sel, sont choisis dans le groupe comprenant un polyéthoxydiol, un poly(éthoxy/propoxy)diol, un diol comprenant une chaîne latérale de type éthoxy ou (éthoxy/propoxy), un diol comprenant un groupe de type acide carboxylique, un diol comprenant un groupe sulfonique, un diol comprenant un groupe phosphate, un polyéthoxymono-ol, un poly(éthoxy/propoxy)mono-ol, un mono-ol comprenant une chaîne latérale de type éthoxy ou (éthoxy/propoxy), un mono-ol comprenant un groupe de type acide carboxylique ou de type acide sulfonique ou un sel, ou des mélanges de ceux-ci.

9. Procédé selon l'une quelconque des revendications 1 à 8, dans lequel l'agent d'extension est un polyol, de l'eau, un aminoalcool, de l'ammoniaque, une amine de type aliphatique, alicyclique, aromatique, araliphatique ou hétérocyclique primaire ou secondaire, notamment une diamine, une hydrazine ou une hydrazine substituée, ou un mélange de ceux-ci, les agents d'extension solubles dans l'eau étant préférés.

10. Procédé selon l'une quelconque des revendications 1 à 9, dans lequel l'agent de neutralisation est une amine tertiaire telle que la tripropylamine, la diméthylbutylamine, la diméthyléthanolamine, la diéthyléthanolamine, la triéthylamine, le 2-amino-2-méthyl-1-propanol et la N-éthylmorpholine, ou des hydroxydes de métaux alcalins tels que l'hydroxyde de sodium, l'hydroxyde de potassium, l'hydroxyde de lithium ou des amines tertiaires non volatiles telles que la N-butyldiéthanolamine ou la N,N-bis[3-(diniéthylamino)propyl]-N',N'-diniéthylpropane-1,3-diamine ou des mélanges de celles-ci.

11. Procédé selon l'une quelconque des revendications 1 à 10, dans lequel le prépolymère peut contenir entre 0 et 35 % en poids, de préférence moins de 20 % en poids de co-solvants.

12. Procédé selon l'une quelconque des revendications 1 à 11, dans lequel la teneur en matières solides de la dispersion aqueuse de polyuréthane est d'au moins 25 % en poids, de préférence d'au moins 30 % en poids.

13. Dispersion pouvant être obtenue à l'aide du procédé tel que défini dans l'une quelconque des revendications précédentes.

14. Revêtement ou film obtenu, de préférence sur un substrat plan et souple, à partir d'une dispersion telle que définie dans la revendication 13.
